(19) Europäisches Patentamt
European Patent Office
Office européen des brevets

(11) **EP 4 715 609 A1**

(12) **EUROPEAN PATENT APPLICATION**
published in accordance with Art. 153(4) EPC

(43) Date of publication:
**25.03.2026 Bulletin 2026/13**

(21) Application number: **24830512.0**

(22) Date of filing: **13.06.2024**

(51) International Patent Classification (IPC):
**G06F 12/06** (2006.01)

(52) Cooperative Patent Classification (CPC):
**G06F 12/0238; G06F 12/0292; G06F 12/0607;**
G06F 2212/1032; G06F 2212/7201;
G06F 2212/7204

(86) International application number:
**PCT/CN2024/099055**

(87) International publication number:
**WO 2025/001866 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.06.2023   CN 202310794233
15.09.2023   CN 202311199956**

(71) Applicant: **Huawei Technologies Co., Ltd.
Shenzhen, Guangdong 518129 (CN)**

(72) Inventors:
• **ZHU, Xiaoming
Shenzhen, Guangdong 518129 (CN)**
• **CHEN, Yifeng
Shenzhen, Guangdong 518129 (CN)**
• **WANG, Chengxu
Shenzhen, Guangdong 518129 (CN)**
• **CUI, Zijing
Shenzhen, Guangdong 518129 (CN)**

(74) Representative: **Gill Jennings & Every LLP
The Broadgate Tower
20 Primrose Street
London EC2A 2ES (GB)**

(54) **DATA PROCESSING SYSTEM, MEMORY, DATA READ-WRITE METHOD, AND DEVICE**

(57)   A data processing system, a storage, a data reading/writing method, and a device are provided. In this application, a processor sends a read/write request to the storage. The read/write request is used to request to perform data reading/writing in the storage, and the read/write request carries a logical address of data. After receiving the read/write request, the storage maps the logical address to target positions in banks of N storage chips in the storage, and performs data reading/writing at the target positions in the banks of the N storage chips. The target positions in the banks of the N storage chips are distributed in different areas. The N target positions are not in a same area, so that in a single read/write process in the storage, an error rate of the storage does not fluctuate much due to different logical addresses, and it is ensured that the error rate of the storage is stable within a small range.

FIG. 4

**Description**

CROSS-REFERENCE TO RELATED APPLICATIONS

This application claims priorities to Chinese Patent Application No. 202310794233.2 filed with the China National Intellectual Property Administration on June 29, 2023 and entitled "STORAGE APPARATUS", and Chinese Patent Application No. 202311199956.4 filed with the China National Intellectual Property Administration on September 15, 2023 and entitled "DATA PROCESSING SYSTEM, STORAGE, DATA READING/WRITING METHOD, AND DEVICE", which are incorporated herein by reference in their entireties.

TECHNICAL FIELD

This application relates to the field of communication technologies, and in particular, to a data processing system, a storage, a data reading/writing method, and a device.

BACKGROUND

Memory addressing generally refers to locating a position in a bank of a storage chip in a memory based on a logical address sent by a processor. In some storages, data at a logical address is usually distributed in storage chips, and the storage chips share the logical address. That is, in a memory addressing process, a position in a bank of each storage chip needs to be determined. In other words, a plurality of positions need to be located.

Actually, due to design of an internal circuit of the storage, the bank of the storage chip may include a plurality of areas with different error rate ranges. During memory addressing, if the plurality of positions are all in an area with a highest error rate range in banks to which the plurality of positions belong, an error probability of data reading/writing at the logical address is doubled. On the contrary, during memory addressing, if the plurality of positions are all in an area with a lowest error rate range in the banks to which the plurality of positions belong, the error probability of data reading/writing at the logical address is greatly reduced.

It can be learned that, based on the existing memory addressing manner, an overall error rate of the storage changes with a change of the logical address. The overall error rate of the storage is unstable, which increases difficulty in subsequently designing the storage as a storage having an error correction capability.

SUMMARY

Embodiments of this application provide a data processing system, a storage, a data reading/writing method, and a device, to stabilize an error rate of a storage.

According to a first aspect, an embodiment of this application provides a data processing system. The data processing system includes a processor and a storage.

The processor sends a read/write request to the storage. The read/write request is used to request to perform data reading/writing in the storage, and the read/write request carries a logical address of data.

After receiving the read/write request, the storage maps the logical address to target positions in banks of N storage chips in the storage, and performs data reading/writing at the target positions in the banks of the N storage chips. The target positions in the banks of the N storage chips are distributed in different areas, and N is a positive integer. Areas in the banks are formed by division based on error rates, and error rates of different areas are different.

In the foregoing system, for a same logical address, the storage maps the logical address to target positions in banks of the N storage chips. The N target positions are distributed in different areas. The N target positions are not in a same area, so that in a single read/write process in the storage, an error rate of the storage does not fluctuate much due to different logical addresses, and it is ensured that the error rate of the storage is stable within a small range.

In a possible implementation, the storage has an address remapping function, and the storage provides an enabling option of the address remapping function externally. For example, before sending the read/write request, the processor sends an address remapping instruction to the storage. The address remapping instruction is used to enable the address remapping function of the storage. In this way, the processor can enable the address remapping function of the storage based on an actual requirement.

In a possible implementation, the storage includes N first address remapping modules, each storage chip corresponds to one first address remapping module, and after receiving the address remapping instruction, a control circuit controls, according to the address remapping instruction, M first address remapping modules to be in a working state. M is a positive integer, and M is not greater than N.

Any first address remapping module in the working state modifies a physical address translated from the logical address. A modified physical address points to a target position in a bank of a storage chip corresponding to the first address remapping module.

In the foregoing system, the first address remapping module in the working state can modify the physical address. Because first address remapping modules corresponding to M of the N storage chips can modify the physical address, physical addresses obtained by the M storage chips are not completely the same, and it is further ensured that the logical address can be finally mapped to target positions in different areas of the N storage chips.

In a possible implementation, when modifying the physical address, the first address remapping module in the working state may modify a field that is in the physical address and that points to a row and/or a column in a bank.

In the foregoing system, the first address remapping module in the working state needs to change only a part of fields in the physical address, to ensure that the logical address can be finally mapped to target positions in different areas of the N storage chips. The implementation is simple.

In a possible implementation, the first address remapping module not in the working state does not modify the physical address, but maintains each field in the physical address unchanged. The physical address points to a target position in a bank of a storage chip corresponding to the first address remapping module.

In the foregoing system, a first address remapping module in the working state and a first address remapping module not in the working state process the physical address in different manners, which can finally ensure that N physical addresses obtained by the N storage chips are different, and target addresses to which the N different physical addresses are mapped in banks of the N storage chips belong to different areas.

In a possible implementation, any storage chip determines a target position in a bank of the storage chip based on a physical address obtained from a corresponding first address remapping module, and performs data reading/writing at the target position. The physical address obtained by the storage chip from the second address remapping module in the working state is a modified physical address, and the physical address obtained by the storage chip from the second address remapping module not in the working state is the original physical address.

In the foregoing system, physical addresses obtained by the N storage chips from corresponding first address remapping modules are not completely the same, and finally determined target positions in banks of the storage chips are different.

In a possible implementation, in the foregoing descriptions, the address remapping function of the storage is implemented by directly modifying the physical address translated from the logical address. Alternatively, the address remapping function of the storage may be implemented by modifying the logical address. The following describes this implementation. The control circuit includes N second address remapping modules, and each storage chip corresponds to one second address remapping module.

The control circuit controls, according to the address remapping instruction, M second address remapping modules to be in the working state. M is not greater than N.

Any second address remapping module in the working state modifies the logical address. A modified logical address is mapped to a target position in a bank of a storage chip corresponding to the second address remapping module.

In the foregoing system, the second address remapping module in the working state can modify the logical address. Because second address remapping modules corresponding to M of the N storage chips can modify the logical address, physical addresses translated from logical addresses and obtained by the M storage chips are not completely the same, and it is further ensured that the logical address can be finally mapped to target positions in different areas of the N storage chips.

In a possible implementation, the second address remapping module in the working state modifies a field that is in the logical address and that points to a row and/or a column in a bank.

In the foregoing system, the second address remapping module in the working state needs to change only a part of fields in the logical address, to ensure that the logical address can be finally mapped to target positions in different areas of the N storage chips. The implementation is simple.

In a possible implementation, the second address remapping module not in the working state maintains each field in the logical address unchanged. The logical address points to a target position in a bank of a storage chip corresponding to the first address remapping module.

In the foregoing system, a second address remapping module in the working state and a second address remapping module not in the working state process the logical address in different manners, which can finally ensure that N physical addresses obtained by the N storage chips are different, and target positions to which the N different physical addresses are mapped in banks of the N storage chips belong to different areas.

In a possible implementation, the control circuit includes an address translation module. The address translation module translates a logical address obtained from the second address remapping module into a physical address, and sends the physical address to a storage chip corresponding to the second address remapping module. The logical address obtained by the address translation module from the second address remapping module in the working state is a modified logical address, and the logical address obtained by the address translation module from the second address remapping module not in the working state is the original logical address.

In the foregoing system, the address translation module can implement translation from a logical address to a physical address, and different logical addresses are translated into different physical addresses, which ensures that the logical address received by the storage can be mapped to target positions distributed in different areas in banks of the N storage chips.

According to a second aspect, this application further provides a storage. The storage has a function of the storage in the first aspect and any possible implementation. For a part of beneficial effects, refer to the descriptions of the first aspect. Details are not described herein again. The storage includes a control circuit and N storage chips. N is a positive integer.

In the storage, the control circuit receives a read/write request sent by a processor. The read request is used to request to perform data reading/writing in the storage, and the read/write request carries a logical address of data. After receiving the read/write request, the control circuit translates the logical address into a physical address, and sends the physical address translated from the logical address to the N storage chips of the storage. The physical address points to target positions in banks of the N storage chips of the storage, the target positions in the banks of the N storage chips are distributed in different areas, and N is a positive integer. The different areas are formed by division based on error rates in the banks, and error rate ranges of the different areas are different.

After receiving the physical address, any storage chip performs data reading/writing at a target position in a bank of the storage chip.

In the foregoing storage, for a same logical address, the logical address may be mapped to target positions in banks of the N storage chips in the storage, and the N target positions are distributed in different areas, which ensures that an error rate of the storage does not fluctuate much with different logical addresses received by the storage.

In a possible implementation, the control circuit receives an address remapping instruction sent by the processor. The address remapping instruction is used to enable an address remapping function of the storage.

In a possible implementation, the storage includes N first address remapping modules, each storage chip includes one first address remapping module, and the control circuit controls, according to the address remapping instruction, M first address remapping modules to be in a working state. M is a positive integer, and M is not greater than N.

Any first address remapping module in the working state modifies the physical address translated from the logical address. A modified physical address points to a target position in a bank of a storage chip corresponding to the first address remapping module.

In a possible implementation, the first address remapping module in the working state modifies a field that is in the physical address and that points to a row and/or a column in a bank.

In a possible implementation, the first address remapping module not in the working state maintains each field in the physical address unchanged. The physical address points to a target position in a bank of a storage chip corresponding to the first address remapping module.

In a possible implementation, any storage chip determines a target position in a bank of the storage chip based on a physical address obtained from a corresponding first address remapping module, and performs data reading/writing at the target position. The physical address obtained by the storage chip from the first address remapping module in the working state is a modified physical address, and the physical address obtained by the storage chip from the first address remapping module not in the working state is the original physical address.

In a possible implementation, the control circuit includes N second address remapping modules, each storage chip corresponds to one second address remapping module, and the control circuit controls, according to the address remapping instruction, M second address remapping modules to be in the working state. M is a positive integer, and M is not greater than N.

Any second address remapping module in the working state modifies the logical address. A modified logical address points to a target position in a bank of a storage chip corresponding to the second address remapping module.

In a possible implementation, the second address remapping module in the working state modifies a field that is in the logical address and that points to a row and/or a column in a bank.

In a possible implementation, the second address remapping module not in the working state maintains each field in the logical address unchanged. The logical address is mapped to a target position in a bank of a storage chip corresponding to the second address remapping module.

In a possible implementation, the control circuit includes an address translation module. The address translation module translates a logical address obtained from the second address remapping module into a physical address, and sends the physical address to a storage chip corresponding to the second address remapping module. The logical address obtained by the address translation module from the second address remapping module in the working state is a modified logical address, and the logical address obtained by the address translation module from the second address remapping module not in the working state is the original logical address.

According to a third aspect, this application further provides a data reading/writing method. In the data reading/writing method, a storage has a function of the storage in the first aspect and any possible implementation. For beneficial effects, refer to the descriptions of the first aspect. Details are not described herein again.

A control circuit receives a read/write request sent by a processor, where the read request is used to request to perform data reading/writing in the storage, and the read/write request carries a logical address of data; and translates the logical address into a physical address, and sends the physical address translated from the logical address to N storage chips, where the physical address points to target positions in banks of the N storage chips of the storage, and the target positions in the banks of the N storage chips are distributed in different areas.

Any storage chip performs data reading/writing at a target position in a bank of the storage chip.

In a possible implementation, the control circuit may further receive an address remapping instruction sent by the processor. The address remapping instruction is used to enable an address remapping function of the method.

In a possible implementation, the storage includes N first address remapping modules, each storage chip corresponds to one first address remapping module, and the control circuit controls, according to the address remapping instruction, M first address remapping modules to be in a working state. M is not greater than N.

Any first address remapping module in the working state modifies the physical address translated from the logical address. A modified physical address points to a target position in a bank of a storage chip corresponding to the first address remapping module.

In a possible implementation, when the first address remapping module in the working state modifies the physical address translated from the logical address, the first address remapping module in the working state modifies a field that is in the physical address and that points to a row and/or a column in a bank.

In a possible implementation, the first address remapping module not in the working state maintains each field in the physical address unchanged. The physical address points to a target position in a bank of a storage chip corresponding to the first address remapping module.

In a possible implementation, when the any storage chip performs data reading/writing at the target position in the bank of the storage chip, the any storage chip determines the target position in the bank of the storage chip based on a physical address obtained from a corresponding first address remapping module, and performs data reading/writing at the target position.

In a possible implementation, the control circuit includes N second address remapping modules, each storage chip corresponds to one second address remapping module, and when the control circuit translates the logical address into the physical address, the control circuit controls, according to the address remapping instruction, M second address remapping modules to be in the working state. M is not greater than N.

Any second address remapping module in the working state modifies the logical address. A modified logical address points to a target position in a bank of a storage chip corresponding to the second address remapping module.

In a possible implementation, the second address remapping module not in the working state maintains each field in the logical address unchanged. The logical address points to a target position in a bank of a storage chip corresponding to the second address remapping module.

In a possible implementation, the control circuit includes an address translation module. The address translation module translates a logical address obtained from the second address remapping module into a physical address, and sends the physical address to a storage chip corresponding to the second address remapping module. The logical address obtained by the address translation module from the second address remapping module in the working state is a modified logical address, and the logical address obtained by the address translation module from the second address remapping module not in the working state is the original logical address.

According to a fourth aspect, this application further provides a computing device. The computing device includes the storage mentioned in the second aspect and the possible implementations of the second aspect, and optionally, may further include a processor.

According to a fifth aspect, this application further provides a computer-readable storage medium. The computer-readable storage medium stores instructions. When the instructions are run on a computer, the computer is enabled to perform the method in the third aspect and the possible implementations of the third aspect.

According to a sixth aspect, this application further provides a computer program product including instructions. When the computer program product runs on a computer, the computer is enabled to perform the method in the third aspect and the possible implementations of the third aspect.

According to a seventh aspect, this application further provides a computer chip. The chip is connected to a storage, and the chip is configured to read and execute a software program stored in the storage, to perform the method in the third aspect and the possible implementations of the third aspect.

BRIEF DESCRIPTION OF DRAWINGS

FIG. 1 is a diagram of memory addressing in a storage;
FIG. 2 is a diagram of a structure of a data processing system according to an embodiment of this application;
FIG. 3 is a diagram of a structure of a storage according to an embodiment of this application;

FIG. 4 is a diagram of a structure of a storage chip according to an embodiment of this application;

FIG. 5A is a diagram of distribution of areas in a bank of a storage chip according to an embodiment of this application;

FIG. 5B to FIG. 5D are diagrams of mapping of a physical address in a bank of a storage chip according to an embodiment of this application;

FIG. 6A and FIG. 6B are diagrams of distribution of banks of a storage chip according to an embodiment of this application;

FIG. 7 is a diagram of a data reading/writing method according to an embodiment of this application;

FIG. 8 is a diagram of a structure of a storage according to an embodiment of this application; and

FIG. 9 is a diagram of a data reading/writing method according to an embodiment of this application.

DESCRIPTION OF EMBODIMENTS

Before a data processing system, a storage, a data reading/writing method, and a device mentioned in embodiments of this application are described, a memory addressing manner related to embodiments of this application is described first.

Memory addressing manner:

Generally, a storage used as a memory may include a plurality of storage chips (chip). The storage may be a phase change memory (phase change memory, PCM), or may be a dynamic random access memory (dynamic random access memory, DRAM), or may be a storage of another type.

In terms of a hardware structure, the storage chip is a minimum physical unit for storing data in the storage. An internal storage space of any storage chip may be further divided. Each storage chip includes a plurality of banks. Each bank may be considered as a storage matrix, and the storage matrix is like a grid matrix. This "grid matrix" has many columns (column) and many rows (row). When data in the storage space needs to be obtained, only a bank and a row and a column in the bank need to be specified. A size, a quantity of rows, and a quantity of columns of each bank are fixed, that is, a range of logical addresses covered by each bank is fixed.

In a storage such as a PCM or a DRAM, a plurality of storage chips included in the storage share a same logical address. That is, after the storage receives a read/write request carrying a logical address, a control circuit inside the storage translates the logical address into a physical address, and sends the physical address to each storage chip. An address decoding circuit deployed in each storage chip parses the physical address to obtain address information pointing to a bank, a column, and a row, and data reading/writing is performed in the bank, the column, and the row to which the address information points.

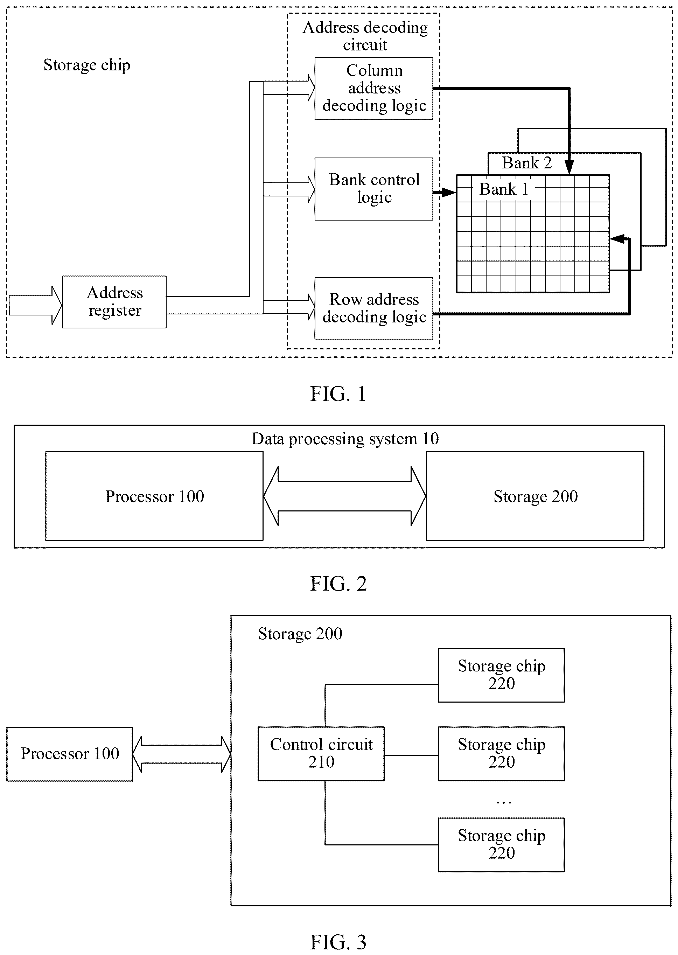

FIG. 1 is a diagram of memory addressing in a storage. FIG. 1 shows an example of an addressing manner of one storage chip in the storage. An address register is disposed in the storage chip. The address register is configured to receive a physical address sent from a control circuit of the storage. After receiving the physical address, the address register sends the received physical address to an address decoding circuit in the storage chip. The address decoding circuit can determine, from the received physical address, address information pointing to a bank, a column, and a row, and then locate the bank in the storage chip and the row or the column in the bank.

Specifically, the address decoding circuit includes bank control logic, column address decoding logic, and row address decoding logic. After receiving the physical address, the address register may send a part (for example, 4 bits) that is in the physical address and that represents the bank to the bank control logic, send a part (for example, 15 bits) that is in the logical address and that represents the column (column) to the column address decoding logic, and send a part (for example, 11 bits) that is in the logical address and that represents the row (row) to the row address decoding logic. The bank control logic parses out, based on the received part of the physical address, address information pointing to the bank, the column address decoding logic parses out, based on the received part of the physical address, address information pointing to the column, and the row address decoding logic parses out, based on the received part of the physical address, address information pointing to the row.

When the storage includes eight storage chips, each storage chip may contribute a part of data. For example, each storage chip contributes 8 bytes (byte) of data. In this way, an amount of data read/written in each data reading/writing operation is a sum of amounts of data contributed by all the storage chips. For example, an amount of data read/written in one data reading/writing operation is 64 bytes of data. Data at the logical address is distributed in the storage chips of the storage in terms of physical positions.

Because physical addresses parsed by address decoding circuits of all the storage chips are translated from a same logical address, address information that is finally parsed out and that points to banks, columns, and rows is generally the same. In other words, the logical address is mapped to a same position in all the storage chips, or it may be understood as that a same physical address is mapped to a same position in all the storage chips.

Due to impact of factors such as a routing manner of an internal circuit of the storage and a design manner of a drive voltage inside the storage, error rates of different areas in a bank of each storage chip are different. That is, each bank may be further divided into a plurality of areas based on error rates, and error rates in each area are in a same range, while error rates in different areas are in different ranges. That is, each bank of the storage chip includes an area with a high error rate, an area with a low error rate, and an area with a moderate error rate. If a position to which the logical address is mapped in the bank is in the area with the high error rate, an error probability of data reading/writing at the position is high, that is, read data or written data is prone to an error. If the position to which the logical address is mapped in the bank is in the area with the low error rate, the error probability of data reading/writing at the position is low, that is, the read data or the written data is not prone to an error. The error rate indicates a probability of a data error during data reading/writing in the position or area. In embodiments of this application, a specific manner of calculating the error rate is not limited. An error rate of a position or an area may be equal to a ratio of a quantity of error bits in a specified quantity of data reading/writing operations to a total quantity of bits read/written in the specified quantity of data reading/writing operations, or may be equal to a ratio of a quantity of error bits in a plurality of data reading/writing operations performed in a unit time to a total quantity of bits read/written in a specified quantity of data reading/writing operations.

It can be learned that a same logical address (or a physical address translated from the logical address) is finally mapped to a same position in a bank of each storage chip. Because positions are the same, error rate ranges of areas to which the positions belong are also the same. If an error rate of the area to which the position belongs is high, an error rate of data reading/writing at the logical address is doubled.

That is, in this memory addressing manner, during data reading/writing in the storage, an overall error rate of the storage changes with an area in which data is located, which is unstable. In addition, to reduce the overall error rate of the storage, an error correction circuit is added to the storage, but the unstable error rate increases difficulty in setting the error correction circuit.

Therefore, the storage mentioned in this application has an address remapping function. When the storage having the function maps a logical address, the logical address may be mapped to different positions in banks of storage chips. That is, the positions to which the logical address is mapped in the banks do not belong to areas with a same error rate range, and the positions to which the logical address is mapped in the banks may be distributed in a plurality of areas. In this way, error rates of the positions to which the logical addresses are mapped in the banks are not completely the same. The address remapping function of the storage has two implementations. One implementation is to process a physical address translated from a logical address received by each storage chip in the storage. The address remapping function of the storage is implemented by using a first address remapping module (the first address remapping module is configured to modify the physical address) inside the storage chip. In the other implementation, a control circuit in the storage translates a logical address into physical addresses that are not completely the same, and sends the physical addresses that are not completely the same to the storage chips respectively. The address remapping function of the storage is implemented by using a second address remapping module (the second address remapping module is configured to modify the logical address) inside the control circuit. Regardless of which implementation is used, a final effect of the implementation is that a same logical address is finally mapped to different positions in banks of the storage chips. In this way, during data reading/writing in the storage, an overall error rate of the storage does not fluctuate greatly with an area in which data is located, and the overall error rate of the storage is stable.

First implementation: The address remapping function of the storage is implemented by using the first address remapping module inside the storage chip.

The following describes, with reference to an accompanying drawing, the data processing system provided in embodiments of this application. FIG. 2 is a diagram of a structure of a data processing system according to an embodiment of this application. The data processing system 10 includes a processor 100 and a storage 200.

The processor 100 is a computing core of the system. The processor 100 can complete main data computing operations. In a process of performing a data computing operation, the processor 100 may access the storage 200, to read data from or write data into the storage 200. For example, the processor 100 can read data from the storage 200, and perform data computing on the read data; and the processor 100 may further store data generated by the data computing into the storage 200.

When accessing the storage 200, the processor 100 sends a read/write request to the storage 200. The read/write request carries a logical address of data, to indicate the storage 200 to perform data reading/writing at the logical address.

In this embodiment of this application, the processor 100 can access the storage 200, and the processor 100 can further enable an address remapping function of the storage 200. For example, the processor 100 may send an address remapping instruction to the storage 200. The address remapping instruction is used to enable the address remapping function of the storage 200.

The processor 100 may be a central processing unit (central processing unit, CPU), or may be another specific integrated circuit. Alternatively, the processor 100 may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like.

The storage 200 has a data storing function. The storage 200 may store data required by the processor 100 for data computing, and may further store data generated by data computing of the processor 100. For example, the storage 200 receives and processes the read/write request from the processor 100, performs data reading/writing at the logical address: writing data obtained by data computing of the processor 100 into the logical address, or reading, from the logical address, data required by the processor 100 for data computing, and feeding back the read data to the processor 100.

In this embodiment of this application, the storage 200 further has the address remapping function. The storage 200 can map the logical address to target positions in a plurality of banks. The target positions in the plurality of banks are distributed in a plurality of areas, and different areas correspond to different error rate ranges.

The storage 200 may provide an enabling option of the address remapping function externally, that is, the storage 200 allows an apparatus other than the storage 200 to enable the address remapping function. When the address remapping function is enabled, the storage 200 may map a received logical address to target positions in a plurality of banks, where the target positions in the plurality of banks are distributed in a plurality of areas. When the address remapping function is not enabled, the storage 200 may map a received logical address to a same position in a plurality of banks.

A manner in which the storage 200 provides the enabling option of the address remapping function is not limited in this embodiment of this application. For example, an apparatus of the storage 200 is configured with an enabling switch of the address remapping function, and a user may turn on or off the enabling switch of the address remapping function based on an actual requirement. For another example, the storage 200 is configured with an address remapping instruction parsing function. An apparatus other than the storage 200 may send an address remapping instruction to the storage 200. The storage 200 enables the address remapping function by parsing the received address remapping instruction.

In addition, when the address remapping function is enabled, the storage 200 may further provide a plurality of different address remapping policies externally. Any address remapping policy describes a part or all of the following information:

a quantity of first address remapping modules 222 in a working state; and
a manner in which any first address remapping module 222 in the working state modifies a physical address translated from a logical address.

Quantities of first address remapping modules 222 in the working state and/or manners in which any first address remapping module 222 in the working state modifies a physical address translated from a logical address that are described in different address remapping policies may be different.

Correspondingly, a manner in which the storage 200 provides the plurality of different address remapping policies is not limited in this embodiment of this application, either. For example, a selection button for the plurality of different address remapping policies is configured on the storage 200, and the user may select an address remapping policy based on an actual requirement by using the selection button. For another example, the storage 200 is configured with the address remapping instruction parsing function. In addition to instructing to enable the address remapping function, the address remapping instruction sent by the apparatus other than the storage 200 to the storage 200 may further indicate an address remapping policy. The storage 200 parses the received address remapping instruction, enables the address remapping function, and performs address remapping by using the address remapping policy indicated in the address remapping instruction.

Certainly, in an actual application, the address remapping function may alternatively be enabled before the storage 200 is delivered from a factory, that is, the address remapping function is in an enabled state after the storage 200 is delivered from the factory, and no additional operation is required.

The following describes a structure of the storage 200 with reference to FIG. 3. FIG. 3 shows a storage 200 according to an embodiment of this application. The storage 200 includes a control circuit 210 and a plurality of storage chips 220. For specific descriptions of the storage chip 220, refer to the foregoing descriptions. Details are not described herein again.

In the storage 200, the storage chip 220 is mainly configured to store data, the control circuit 210 is a control center of the storage 200, and the control circuit 210 can process a read/write request received by the storage 200. That is, the control circuit 210 can parse a logical address carried in the read/write request, and perform data reading/writing on each storage chip 220 based on the logical address.

In this embodiment of this application, the control circuit 210 can translate the logical address into a physical address, and send the physical address to each storage chip 220. In any storage chip 220, the physical address points to a target position in a bank of the storage chip 220.

When the storage 200 enables the address remapping function, the target positions in the plurality of banks are distributed in different areas, and the different areas correspond to different error rate ranges.

When the storage 200 does not enable the address remapping function, the target positions in the plurality of banks are distributed in a same area.

Optionally, when the storage 200 provides the enabling option of the address remapping function externally, the control circuit 210 can detect an enabling status of the address remapping function, that is, determine whether to enable the address remapping function. For example, when the enabling switch of the address remapping function is configured on an apparatus of the storage 200, the control circuit 210 may detect the enabling switch of the address remapping function, to determine whether to enable the address remapping function. For another example, when the storage 200 is configured with the address remapping instruction parsing function, the parsing function may be implemented by the control circuit 210, and the control circuit 210 may parse a received address remapping instruction to enable the address remapping function.

In subsequent descriptions, only a case in which the storage 200 enables the address remapping function is described. When the storage 200 does not enable the address remapping function, for a manner in which the storage 200 internally performs data reading/writing at a logical address, refer to the manner shown in FIG. 1. Details are not described herein again.

It can be learned from the memory addressing manner shown in FIG. 1 that, when a logical address is mapped to each storage chip 220, the control circuit 210 needs to translate the logical address to obtain a corresponding physical address, and then the physical address is transmitted to each storage chip 220. Each storage chip 220 parses the physical address to determine address information pointing to a bank, a row, and a column, and then locates a position in the bank based on the address information pointing to the bank, the row, and the column.

In this embodiment of this application, different storage chips 220 may parse the physical address in different parsing manners, and address information that is finally obtained in the different parsing manners and that points to banks, rows, and columns is not completely the same. The not completely the same herein means that the address information that is obtained in the different parsing manners and that points to the banks, the rows, and the columns is completely different or partly different.

It is assumed that two groups of address information may be generated when a same physical address is parsed in two different manners. Each group of address information includes address information pointing to a bank, a row, and a column. If address information that is in the two groups of address information and that points to banks is the same, and address information that is in the two groups of address information and that points to rows and columns is completely different, the two groups of address information respectively correspond to two different positions in the banks, and areas in which the two positions are located may be different. If address information that is in the two groups of address information and that points to banks and rows are the same, and address information that is in the two groups of address information and that points to columns is different, the two groups of address information respectively correspond to different positions in the banks, and areas in which the two positions are located may be different.

When the storage 200 enables the address remapping function, to ensure that the target positions to which the logical address is mapped in the plurality of banks are distributed in different areas, the storage chips 220 may parse the physical address in completely different manners, to obtain a plurality of groups of address information that are not completely the same. In other words, the plurality of storage chips 220 may translate the physical address into a plurality of groups of address information that are not completely the same, and the plurality of groups of address information that are not completely the same correspond to different target positions in a plurality of banks. In this way, the target positions in the plurality of banks do not belong to a same area.

In this embodiment of this application, "not completely the same" represents two cases. One is being partly the same and partly different. The other is being completely different.

The storage chips 220 may parse the physical address in partly different manners, to obtain a plurality of groups of address information that are not completely the same. That is, for a part of storage chips 220 in the plurality of storage chips 220, the physical address is parsed in one parsing manner, to finally obtain a plurality of groups of same address information; and for another part of storage chips 220 in the plurality of storage chips 220, the physical address is parsed in another parsing manner for the logical address, to finally obtain a plurality of groups of same address information. In this way, for a plurality of groups of finally obtained address information that are not completely the same, a part of the plurality of groups of address information correspond to a same target position in a plurality of banks, and another part of the plurality of groups of address information correspond to another same target position in a plurality of banks.

For example, the storage chips 220 use two different parsing manners for the physical address. A storage chip 220-1, a storage chip 220-2, a storage chip 220-3, and a storage chip 220-4 use one parsing manner, while a storage chip 220-5, a storage chip 220-6, a storage chip 220-7, and a storage chip 220-8 use another parsing manner. In this case, four groups of address information obtained by parsing in the storage chip 220-1, the storage chip 220-2, the storage chip 220-3, and the storage chip 220-4 are the same, and respectively point to target positions A in banks of the storage chip 220-1, the storage chip 220-2, the storage chip 220-3, and the storage chip 220-4. Positions of the target positions A in the banks to which the target positions A belong are the same. In other words, the target positions are the same in the plurality of banks. Four groups of address information obtained by parsing in the storage chip 220-5, the storage chip 220-6, the storage chip 220-7, and the storage chip 220-8 are the same, and respectively point to target positions B in banks of the storage chip 220-5, the storage chip 220-6, the storage chip 220-7, and the storage chip 220-8. Positions of the target positions B in the banks to which the target positions B belong are the same. In other words, the target positions are the same in the plurality of banks.

A specific manner in which the storage chip 220 parses the physical address is not limited in this embodiment of this application. Any manner in which the physical address can be parsed into address information pointing to a bank, a row, and a column is applicable to this embodiment of this application. For example, in a process of parsing the physical address, the storage chip 220 may modify a part of fields of the physical address, and then analyze a modified physical address based on a first mapping relationship, to generate address information pointing to a bank, a row, and a column. The first mapping relationship records a correspondence between each field in the physical address and a bank, a row, and a column.

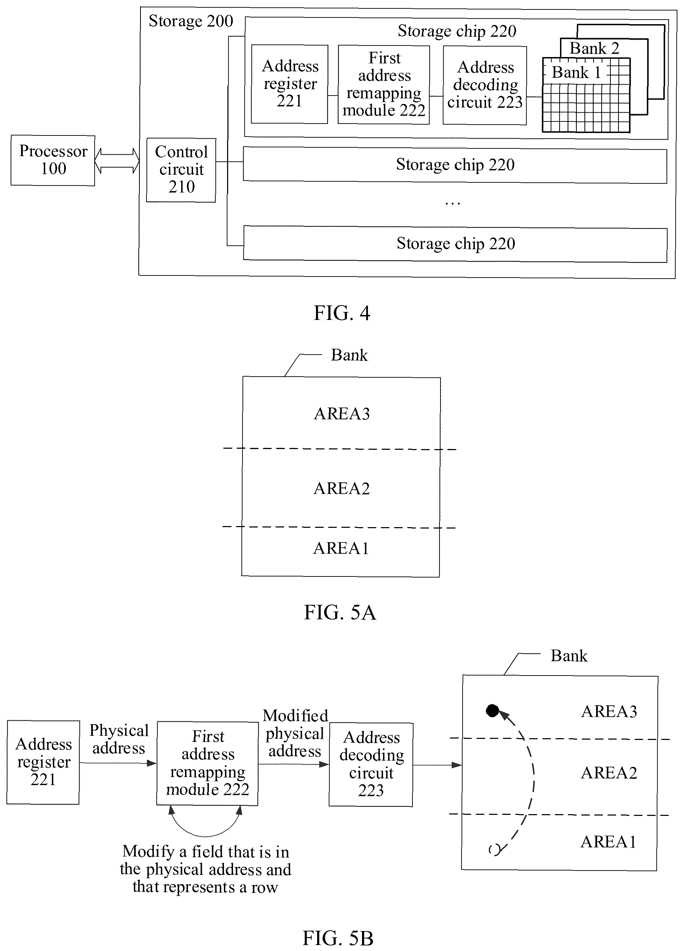

The following describes a structure and a specific function of the storage 200. FIG. 4 is a diagram of the structure of the storage 200 according to an embodiment of this application. The storage 200 includes a control circuit 210 and a plurality of storage chips 220. Each storage chip 220 includes an address register 221, a first address remapping module 222, and an address decoding circuit 223.

The address register 221 is a register having a storing function. The first address remapping module 222 and the address decoding circuit 223 may be logic circuits. Specific internal structures of the first address remapping module 222 and the address decoding circuit 223 are not limited in this embodiment of this application. Any logic circuit that can implement a corresponding function may be used as the first address remapping module 222 and the address decoding circuit 223.

In each storage chip 220, the first address remapping module 222 is disposed between the address register 221 and the address decoding circuit 223. That is, a physical address sent by the address register 221 to the address decoding circuit 223 first passes through the first address remapping module 222. After performing a processing operation on the physical address, the first address remapping module 222 may send the physical address on which the processing operation is performed to the address decoding circuit 223. The first address remapping module 222 may perform one of two processing operations on the physical address. One is to modify the physical address, and the other is to maintain each field in the physical address unchanged. The first address remapping module 222 in the working state may modify the physical address, while the first address remapping module 222 not in the working state maintains each field of the physical address unchanged.

For any storage chip 220, the address register 221 is configured to store a physical address sent by the control circuit 210. Generally, when sending the physical address, the control circuit 210 needs a plurality of clock cycles to send the complete physical address to the storage chip 220. That is, a data amount of data transferred by the control circuit 210 in one clock cycle is limited, and the control circuit 210 may send, to the storage chip 220 at a plurality of times, a field included in the physical address. The address register 221 may receive and buffer the field included in the physical address sent by the control circuit 210. For example, the control circuit 210 may send a 6-bit address in each clock cycle, a total length of the physical address is 48 bits, and the control circuit 210 may send the 48-bit physical address to the storage chip 220 in eight clock cycles. Each time the address register 221 receives 6 bits, the address register 221 buffers the 6 bits until an amount of buffered data reaches 48 bits.

After the address register 221 receives all addresses included in the physical address, the address register 221 may send the physical address to the first address remapping module 222.

After receiving the physical address sent by the address register 221, the first address remapping module 222 may perform a processing operation on the physical address, and send the physical address on which the processing operation is performed to the address decoding circuit 223. A manner in which the first address remapping module 222 modifies the physical address is not limited in this embodiment of this application. For example, the first address remapping module 222 may perform inversion on a part of fields in the physical address. For another example, the first address remapping module 222 may perform subtraction on a part of fields in the physical address and a preset value to obtain a difference, and replace the part of fields in the physical address with the difference.

After obtaining the physical address from the first address remapping module 222, the address decoding circuit 223 may analyze the physical address based on the first mapping relationship to obtain address information pointing to a bank, a row, and a column. Then, a target position in a bank of the storage chip 220 is determined, and data reading/writing is performed at the target address. A specific implementation in which the address decoding circuit 223 obtains, based on the physical address, the address information pointing to the bank, the row, and the column is not limited in this embodiment of this application. Any manner of analyzing the physical address to obtain the address information pointing to the bank, the row, and the column is applicable to this embodiment of this application.

Specifically, the address decoding circuit 223 includes bank control logic, column address decoding logic, and row address decoding logic. After modifying the physical address, the first address remapping module 222 may send a part (for example, 4 bits) that is in a modified physical address and that represents a bank to the bank control logic, send a part (for example, 15 bits) that is in the physical address and that represents a column (column) to the column address decoding logic, and send a part (for example, 11 bits) that is in the physical address and that represents a row (row) to the row address decoding logic. The bank control logic obtains, based on the received part of the physical address, address information pointing to the bank, the column address decoding logic obtains, based on the received part of the physical address, address information pointing to the column, and the row address decoding logic obtains, based on the received part of the physical address, address information pointing to the column.

After the address decoding circuit 223 obtains the address information pointing to the bank, the row, and the column, the target position in the bank may be located, and data reading/writing is implemented by changing a working voltage of a component at the target position.

It can be learned from FIG. 1 that, the address register 221 sends a physical address to the address decoding circuit 223, and the address decoding circuit 223 may parse the received physical address to obtain address information pointing to a bank, a row, and a column. In this embodiment of this application, the first address remapping module 222 is added before the address decoding circuit 223. The first address remapping module 222 added before the address decoding circuit 223 can modify the physical address received by the address decoding circuit 223, so that the address decoding circuit 223 can parse a modified physical address. In this modification manner, only a part of circuit logic needs to be added to original design of the storage 200. The modification manner is simple, and costs are low.

The following lists, based on the control circuit 210 shown in FIG. 4, several specific manners in which the storage 200 implements the address remapping function.

Before the several specific implementations are described, it is first assumed that it is determined, by testing the storage 200, that the bank of the storage 200 includes three areas, and each area corresponds to a different error rate range. For ease of description, the three areas are referred to as an area AREA1, an area AREA2, and an area AREA3. Distribution of a physical address in the three areas may be shown in Table 1.

Table 1

|  | AREA3 | AREA2 | AREA1 |
|---|---|---|---|
| ADDR[1]=0, ADDR[0]=0, | ADDR[2:8]+ADDR[9:31]≥40 | ADDR[2:8]+ADDR[9:31] <40 | ADDR[2:8]+ADDR[9:31] <20 |
| ADDR[1]=0, ADDR[0]=1 | ADDR[2:8]+ADDR[9:31]≥40 | ADDR[2:8]+ADDR[9:31] <40 | ADDR[2:8]+ADDR[9:31] <20 |
| ADDR[1]=1, ADDR[0]=0 | ADDR[2:8]+ADDR[9:31]≥40 | ADDR[2:8]+ADDR[9:31] <40 | ADDR[2:8]+ADDR[9:31] <20 |
| ADDR[1]=1, ADDR[0]=1 | ADDR[2:8]+ADDR[9:31]≥40 | ADDR[2:8]+ADDR[9:31] <40 | ADDR[2:8]+ADDR[9:31] <20 |

ADDR[M] indicates the $M^{th}$ bit of the physical address, and ADDR[M:N] indicates the $M^{th}$ bit to the $N^{th}$ bit of the physical address. For example, ADDR[1]=0 indicates that the $1^{st}$ bit of the physical address is 0. ADDR[2:8]+ADDR[9:31]≥40 indicates that a sum of the $2^{nd}$ bit to the $8^{th}$ bit in the physical address and two times of the $9^{th}$ to the $31^{st}$ bit in the physical address is greater than or equal to 40.

FIG. 5A is a diagram of distribution of an area AREA1, an area AREA2, and an area AREA3 in a bank. The area AREA1 is at a lower part of the bank, the area AREA3 is at an upper part of the bank, and the area AREA2 is in the middle of the bank. According to testing, in the three areas, the area AREA1 has a highest error rate, the area AREA2 has a moderate error rate, and the area AREA3 has a lowest error rate.

It should be noted that division of the areas with different error rate ranges in the bank is related to a plurality of factors such as routing of the control circuit 210 inside the storage 200 and design of a drive voltage in the storage 200. A quantity of areas included in the bank and an error rate range of each area are related to specific design of the storage 200. In addition, during specific testing, the quantity of areas with different error rate ranges in the bank and the error rate range of each area change due to setting of a test parameter. For example, during specific testing, when a higher precision is selected or there are more level options for error rates, the bank may include more areas. Table 1 merely lists a type of possible distribution.

For any storage chip 220, the storage 200 may implement address remapping in the following two manners.

Manner 1: A physical address pointing to a position in an area AREA1 in a bank of the storage chip 220 is mapped to a target position in an area AREA3.

Positions in the area AREA1 and the area AREA3 are in different rows. Therefore, during the mapping from the area AREA1 to the area AREA3, a field that is in the physical address and that represents a row needs to be changed.

The first address remapping module 222 modifies fields that are in the physical address and that represent a row and a column, so that address information that points to a bank, a row, and a column and that is obtained based on a modified physical address changes relative to address information pointing to a row and a column in address information that points to a bank, a row, and a column and that is obtained based on the original physical address.

For example, a field ADDR'[15:12] that is in the modified physical address and that represents a row satisfies:

$$ADDR'[15:12]=40-ADDR[15:12].$$

As shown in FIG. 5B, the address register 221 sends the physical address to the first address remapping module 222, and after the first address remapping module 222 modifies the field that is in the physical address and that represents the row, the physical address pointing to the position in the area AREA1 in the bank of the storage chip 220 is mapped to the target position in the area AREA3.

Manner 2: A physical address pointing to a position in an area AREA1 in a bank of the storage chip 220 is mapped to a target position in an area AREA2.

A simplest manner of mapping from the area AREA1 to the area AREA2 is to change a field that is in the physical address and that represents a row or fields that are in the physical address and that represent a row and a column.

(1) Change the field that is in the physical address and that represents the row.

The first address remapping module 222 may modify the field that is in the physical address and that represents the row, so that address information that points to a bank, a row, and a column and that is obtained based on a modified physical address changes relative to address information pointing to a row in address information that points to a bank, a row, and a column and that is obtained based on the original physical address.

That is, the first address remapping module 222 needs to modify only the field that is in the physical address and that represents the row. For example, the first address remapping module 222 may perform inversion on one or more bits in the field that is in the physical address and that represents the row, for example, may perform inversion on a bit ADDR[16] in the field that is in the physical address and that represents the row, that is, a bit ADDR'[16] that is in a modified physical address and that represents a row satisfies: ADDR'[13]=invADDR[16].

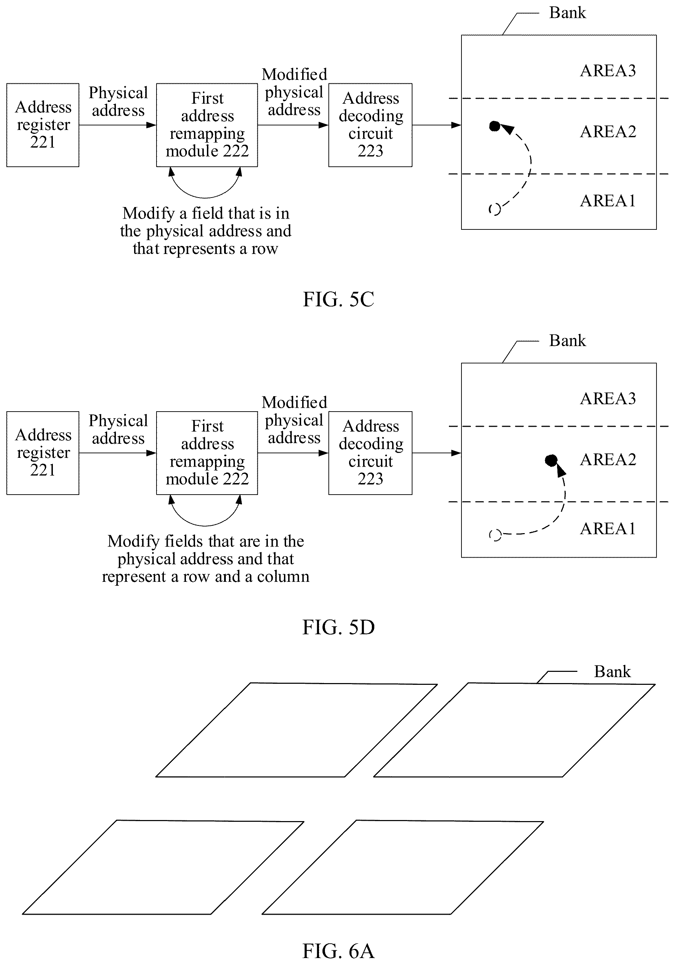

As shown in FIG. 5C, the address register 221 in the control circuit 210 sends the row field in the physical address to the first address remapping module 222, and after the first address remapping module 222 modifies the row field in the physical address, the physical address pointing to the position in the area AREA1 in the bank of the storage chip 220 is mapped to the target position in the area AREA2.

(2) Change the fields that are in the physical address and that represent the row and the column.

The first address remapping module 222 may modify the fields that are in the physical address and that represent the row and the column, so that address information that points to a bank, a row, and a column and that is obtained based on a modified physical address changes relative to address information pointing to a column in address information that points to a bank, a row, and a column and that is obtained based on the original physical address.

That is, the first address remapping module 222 needs to modify the fields that are in the physical address and that represent the row and the column. For example, the first address remapping module 222 may perform inversion on one or more bits in the field that is in the physical address and that represents the column, for example, may perform inversion on a bit ADDR[23] in the field that is in the physical address and that represents the column, that is, a bit ADDR'[23] that is in a modified physical address and that represents a column satisfies: ADDR'[23]=invADDR[23]. The first address remapping module 222 may perform inversion on one or more bits in the field that is in the physical address and that represents the row, for example, may perform inversion on a bit ADDR[16] in the field that is in the physical address and that represents the row, that is, a bit ADDR'[16] that is in a modified physical address and that represents a row satisfies: ADDR'[13]=invADDR[16].

As shown in FIG. 5D, the address register 221 in the control circuit 210 sends the column field in the physical address to the first address remapping module 222, and after the first address remapping module 222 modifies the column field in the physical address, the physical address pointing to the position in the area AREA1 in the bank of the storage chip 220 is mapped to the target position in the area AREA2.

The foregoing specific manners in which the first address remapping module 222 modifies the physical address are merely examples. In an actual application, a manner in which the first address remapping module 222 modifies the physical address may be designed based on a position of the field that is in the physical address and that represents the row and the column and distribution positions of areas with different error rate ranges.

In addition, in an actual application, considering different design manners of the storage chip 220, the banks inside the storage chip 220 may be arranged in a plane manner, that is, the banks included in the storage chip 220 are in a same plane, or the banks inside the storage chip 220 may be arranged in a three-dimensional manner, that is, a bank in the storage chip 220 may include a plurality of stacked layers.

FIG. 6A is a diagram in which the banks inside the storage chip 220 are arranged in the plane manner, where the banks inside the storage chip 220 are in a same plane. In this arrangement manner, all areas in the bank inside the storage chip 220 are in a same plane, that is, during address remapping, only a field that is in a physical address and that represents a row/column needs to be changed.

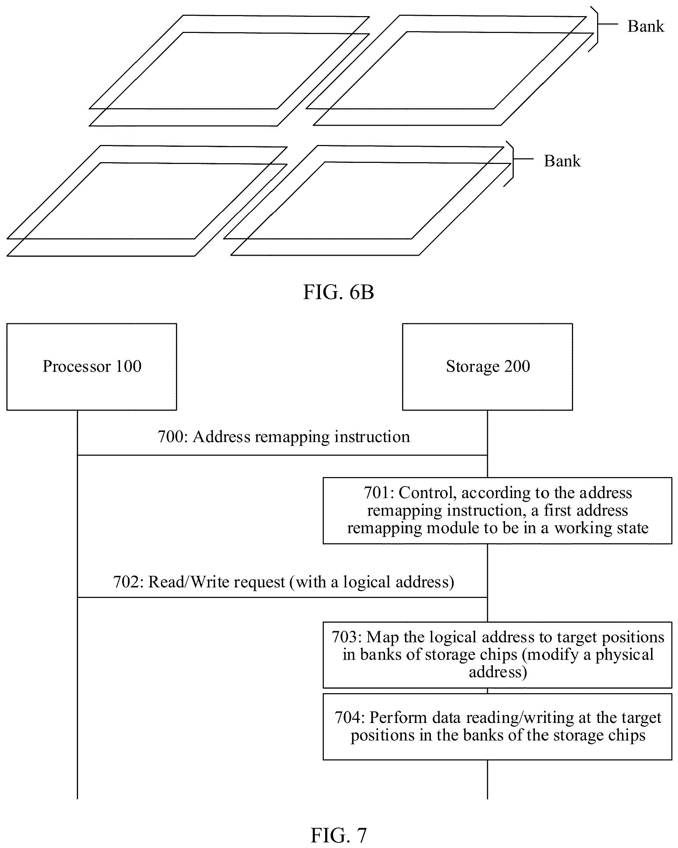

FIG. 6B is a diagram in which the banks inside the storage chip 220 are arranged in the three-dimensional manner, where each bank inside the storage chip 220 includes an upper layer and a lower layer. Herein, only an example in which the bank includes two layers is used. Actually, the bank may alternatively include three layers or even more layers.

Each layer of the bank may include a plurality of different areas, and each area corresponds to a different error rate range. In addition, due to factors such as internal design of the storage 200, error rate ranges of opposite areas in the upper and lower layers of the bank may be different. The opposite areas are two areas at opposite positions in the same bank.

In this arrangement manner, a physical address usually includes a field representing a layer in the bank, and address remapping may be implemented by changing the field that is in the physical address and that represents the layer in the bank, in addition to changing a field in the physical address and that represents a row/column.

In the foregoing descriptions, only several possible specific manners of implementing address remapping are illustrated by using examples. In this embodiment of this application, a manner of modifying each field in a physical address when the control circuit 210 implements address remapping is not limited. Any manner of modifying a physical address to implement mapping from a physical address pointing to a position in one area to a position in another area is applicable to this embodiment of this application.

In addition, in some scenarios, error rates at positions in a same row and column in different banks are different, that is, error rates at a same position in different banks may be different. In this scenario, when modifying a physical address, the first address remapping module 222 may further modify a bit that is in the physical address and that represents a bank. A manner of modifying the bit is similar to a manner in which the first address remapping module 222 modifies a bit that is in the physical address and that represents a row or a column, and details are not described herein again.

Based on the control circuit 210 shown in FIG. 4, when the storage 200 enables the address remapping function, not all first address remapping modules 222 inside the storage 200 need to be in the working state. That is, when the storage 200 enables the address remapping function, it only needs to be ensured that a part of first address remapping modules 222 in the plurality of first address remapping modules 222 can modify a received physical address. Another first address remapping module 222 does not need to modify the received physical address, and may directly send the physical address to the address decoding circuit 223 after receiving the physical address.

For example, if the storage 200 includes N storage chips, the storage 200 includes N first address remapping modules 222. In the storage 200, M first address remapping modules 222 may be enabled, so that the M first address remapping modules 222 are in the working state. M is a positive integer less than N.

Whether a first address remapping module 222 in the storage 200 is in the working state may be set by the control circuit 210. For example, after the control circuit 210 receives the address remapping instruction, the control circuit 210 may control first address remapping modules 222 whose quantity is equal to a specified value in the plurality of first address remapping modules 222 to be in the working state.

Alternatively, whether a first address remapping module 222 in the storage 200 is in the working state and which first address remapping module 222 is in the working state may be set before the storage 200 is delivered from the factory, that is, a part of first address remapping modules 222 in the plurality of first address remapping modules 222 are set to the working state before delivery from the factory.

Alternatively, whether the first address remapping module 222 in the storage 200 is in the working state and the first address remapping module 222 in the working state may be indicated by the processor 100. For example, in addition to instructing to enable the address remapping function, the address remapping instruction sent by the processor 100 further carries an address remapping policy. The address remapping policy indicates a quantity (for example, M) of first address remapping modules 222 in the working state. The control circuit 210 may control a part of first address remapping modules 222 in the plurality of first address remapping modules 222 to be in the working state. A quantity of the part of first address remapping modules 222 is as indicated by the address remapping instruction. For another example, in addition to instructing to enable the address remapping function, the address remapping instruction sent by the processor 100 further indicates first address remapping modules 222 in the working state, that is, notifies which first address remapping modules 222 need to be in the working state. The control circuit 210 may control a part of first address remapping modules 222 in the plurality of first address remapping modules 222 to be in the working state. The part of first address remapping modules 222 are the first address remapping modules 222 indicated by the address remapping instruction.

In addition, if the address remapping policy further indicates a manner in which the first address remapping module 222 in the working state modifies the physical address, the control circuit 210 may further control the first address remapping module 222 in the working state to modify the received physical address in the modification manner indicated by the address remapping policy.

Certainly, in an actual application, if each first address remapping module 222 in the working state modifies the physical address in a different manner, all the first address remapping modules inside the storage 200 222 may be controlled to be in the working state. Due to the manner in which each first address remapping module 222 in the working state modifies the physical address, physical addresses (that is, modified physical addresses) obtained by processing of the first address remapping modules 222 in the storage chips 220 are not completely the same, and the plurality of physical addresses that are not completely the same point to target positions in banks of the storage chips 220.

In the control circuit 210 shown in FIG. 4, a corresponding first address remapping module 222 is disposed for each storage chip 220. In an actual application, the storage 200 may alternatively have first address remapping modules 222 disposed for only a part of storage chips 220. The first address remapping module 222 may be set to the working state before delivery from the factory, or when the processor 100 sends the address remapping instruction to instruct to enable the address remapping function, the control circuit 210 controls the included first address remapping module 222 to be in the working state.

The following describes, with reference to FIG. 7, the data reading/writing method provided in this application. Herein, an example in which the storage 200 provides the enabling option of the address remapping function externally is used for description. When the storage 200 does not provide the enabling option of the address remapping function externally, steps 700 to 701 may be omitted.

Step 700: The processor 100 sends an address remapping instruction to the storage 200. The address remapping instruction is used to instruct to enable the address remapping function, and the address remapping instruction further indicates a first address remapping module 222 that needs to be in the working state.

Step 701: The storage 200 receives the address remapping instruction, and controls, according to the address remapping instruction, the first address remapping module 222 indicated by the address remapping instruction to be in the working state.

Step 702: The processor 100 sends a read/write request to the storage 200. The read/write request carries a logical address of data.

Step 703: The storage 200 receives the read/write request, and maps, in each storage chip 220 of the storage 200, the logical address to a target position in a bank of the storage chip 220.

In the storage 200, after translating the logical address into a physical address, the control circuit 210 sends the physical address to each storage chip 220. The address register 221 in each storage chip 220 receives the physical address sent by the control circuit 210, and sends the physical address to the first address remapping module 222 of each storage chip 220. For the first address remapping module 222 in the working state, the first address remapping module 222 modifies the physical address, and sends a modified physical address to the address decoding circuit 223 of the storage chip 220. The address decoding circuit 223 analyzes the modified physical address to obtain address information pointing to a bank, a row, and a column, and then locates a target position in the bank based on the address information.

For the first address remapping module 222 not in the working state, the first address remapping module 222 sends the received physical address to the address decoding circuit 223 of the storage chip 220. The address decoding circuit 223 analyzes the obtained physical address to obtain address information pointing to a bank, a row, and a column, and then locates a target position in the bank based on the address information.

Step 704: The storage 200 performs data reading/writing at the target position in the bank of each storage chip 220.

When the read/write request is a read request for requesting to read data, the storage 200 reads data from the target position in the bank of each storage chip 220, summarizes data read from the storage chips 220, and feeds back the data to the processor 100.

When the read/write request is a write request for requesting to write data, the storage 200 writes, at the target position in the bank of each storage chip 220, data carried in the write request. Data written at each target position is a part of data carried in the write request, and data written at all the target positions is the data carried in the write request.

Second implementation: The address remapping function of the storage 200 is implemented by using the second address remapping module 211 inside the control circuit 210.

In this implementation, a structure of the data processing system 10 provided in this embodiment of this application and functions of the processor 100 and the storage 200 included in the data processing system are similar to those of the data processing system shown in FIG. 2. For details, refer to the foregoing descriptions. Details are not described herein again.

A difference lies in that in this implementation, when the address remapping function is enabled, the storage 200 may further provide a plurality of different address remapping policies externally. Any address remapping policy describes a part or all of the following information:

a quantity of second address remapping modules 211 in the working state; and
a manner in which any second address remapping module 211 in the working state modifies a logical address.

Quantities of second address remapping modules 211 in the working state and/or manners in which any second address remapping module 211 in the working state modifies a logical address that are described in different address remapping policies may be different.

Correspondingly, a manner in which the storage 200 provides the plurality of different address remapping policies is not limited in this embodiment of this application, either. For example, a selection button for the plurality of different address remapping policies is configured on the storage 200, and the user may select an address remapping policy based on an actual requirement by using the selection button. For another example, the storage 200 is configured with the address remapping instruction parsing function. In addition to instructing to enable the address remapping function, the address remapping instruction sent by the apparatus other than the storage 200 to the storage 200 may further indicate an address remapping policy. The storage 200 parses the received address remapping instruction, enables the address remapping function, and performs address remapping by using the address remapping policy indicated in the address remapping instruction.

The following describes a structure of the storage 200. Similar to the structure of the storage 200 shown in FIG. 3, in this implementation, the storage 200 includes a control circuit 210 and a plurality of storage chips 220. However, in this implementation, structures of the control circuit 210 and the storage chip 220 are different from those in the structure of the storage 200 shown in FIG. 3. The structure of the storage chip 220 is similar to the structure of the storage chip 220 in the embodiment shown in FIG. 1. For details, refer to the foregoing descriptions. Details are not described herein again.

In the storage 200, the storage chip 220 is mainly configured to store data, the control circuit 210 is a control center of the storage 200, and the control circuit 210 can process a read/write request received by the storage 200. That is, the control circuit 210 can parse a logical address carried in the read/write request, and perform data reading/writing on each storage chip 220 based on the logical address.

In this embodiment of this application, the control circuit 210 can map the logical address to each storage chip 220. In any storage chip 220, the logical address may be mapped to a target position in a bank of the storage chip 220. In other words, the control circuit 210 may map the logical address to target positions in a plurality of banks.

When the storage 200 enables the address remapping function, the target positions in the plurality of banks are distributed in different areas, and the different areas correspond to different error rate ranges.

When the storage 200 does not enable the address remapping function, the target positions in the plurality of banks are distributed in a same area.

Optionally, when the storage 200 provides the enabling option of the address remapping function externally, the control circuit 210 can detect an enabling status of the address remapping function, that is, determine whether to enable the address remapping function. For example, when the enabling switch of the address remapping function is configured on an apparatus of the storage 200, the control circuit 210 may detect the enabling switch of the address remapping function, to determine whether to enable the address remapping function. For another example, when the storage 200 is configured with the address remapping instruction parsing function, the parsing function may be implemented by the control circuit 210, and the control circuit 210 may parse a received address remapping instruction to enable the address remapping function.

In subsequent descriptions, only a case in which the storage 200 enables the address remapping function is described. When the storage 200 does not enable the address remapping function, for a manner in which the control circuit 210 performs address reading/writing at a logical address, refer to the manner shown in FIG. 1. Details are not described herein again.

It can be learned from the memory addressing manner shown in FIG. 1 that, when a logical address is mapped to each storage chip 220, the control circuit 210 needs to translate the logical address to obtain a corresponding physical address, and then sends the physical address to each storage chip 220.

In this embodiment of this application, when the control circuit 210 translates the logical address, different translation manners may be used for different storage chips 220, and different physical addresses are finally obtained in the different translation manners.

The control circuit 210 may translate the logical address for the storage chips 220 in manners that are not completely the same, to obtain a plurality of physical addresses that are not completely the same. For example, for a part of storage chips 220 in the plurality of storage chips 220, the control circuit 210 translates the logical address in one translation manner, to finally obtain a plurality of same physical addresses; and for another part of storage chips 220 in the plurality of storage chips 220, the control circuit 210 translates the logical address in another translation manner, to finally obtain a plurality of same physical addresses. In this way, for a plurality of finally obtained physical addresses that are not completely the same, a part of the plurality of physical addresses correspond to a same target position in a plurality of banks, and another part of the plurality of physical addresses correspond to another same target position in a plurality of banks. For another example, the control circuit 210 translates the logical address for the storage chips 220 in completely different manners, to obtain a plurality of groups of completely different address information. That is, in different storage chips 220, the control circuit 210 uses different translation manners for the logical address to translate the logical address, and finally obtains a plurality of completely different physical addresses. In this way, the plurality of physical addresses correspond to different target positions in a plurality of banks, and the target positions in the plurality of banks do not belong to a same area.

For example, the control circuit 210 translates the logical address for the storage chips 220 in two different manners. One translation manner is used for a storage chip 220-1, a storage chip 220-2, a storage chip 220-3, and a storage chip 220-4, while another translation manner is used for a storage chip 220-5, a storage chip 220-6, a storage chip 220-7, and a storage chip 220-8. In this case, physical addresses obtained by the storage chip 220-1, the storage chip 220-2, the storage chip 220-3, and the storage chip 220-4 are the same, and respectively point to target positions A in banks of the storage chip 220-1, the storage chip 220-2, the storage chip 220-3, and the storage chip 220-4. Positions of the target positions A in the banks to which the target positions A belong are the same. In other words, the target positions are the same in the plurality of banks. Physical addresses obtained by the storage chip 220-5, the storage chip 220-6, the storage chip 220-7, and the storage chip 220-8 are the same, and respectively point to target positions B in banks of the storage chip 220-5, the storage chip 220-6, the storage chip 220-7, and the storage chip 220-8. Positions of the target positions B in the banks to which the target positions B belong are the same. In other words, the target positions are the same in the plurality of banks.

A specific manner in which the control circuit 210 translates the logical address is not limited in this embodiment of this application. Any manner in which the logical address can be translated into a physical address is applicable to this embodiment of this application. For example, in a process of translating the logical address, the control circuit 210 may modify a part of or all fields in the logical address, and then analyze a modified logical address based on a preset mapping relationship, to generate a physical address.

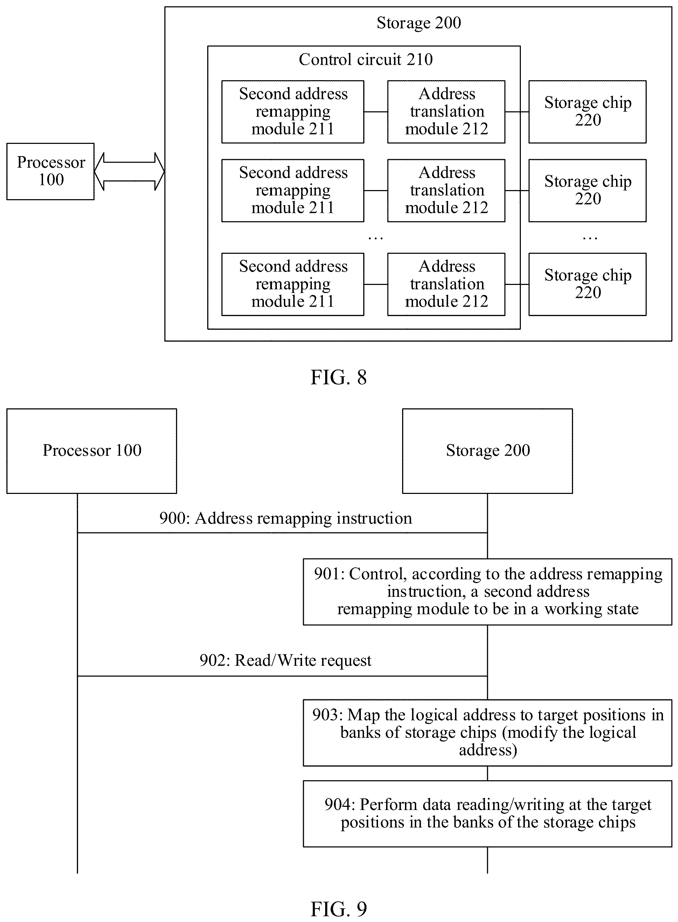

The following describes a structure and a specific function of the storage 200. FIG. 8 is a diagram of the structure of the storage 200 according to an embodiment of this application. The control circuit 210 includes a plurality of second address remapping modules 211 and a plurality of address translation modules 212. The second address remapping modules 211 and the plurality of address translation modules 212 may be logic circuits. Specific structures inside the second address remapping modules 211 and the plurality of address translation modules 212 are not limited in this embodiment of this application. Any logic circuit that can implement a corresponding function is applicable to this embodiment of this application.

Each storage chip 220 corresponds to one second address remapping module 211 and one address translation module 212. The second address remapping module 211 is disposed between the storage chip 220 and the address translation module 212. That is, a logical address first passes through the second address remapping module 211. After performing a processing operation on the logical address, the second address remapping module 211 may send the logical address on which the processing operation is performed to the address translation module 212. The address translation module 212 is configured to translate, into a physical address based on a second mapping relationship, the logical address on which the processing operation is performed. The second mapping relationship is a mapping relationship between a physical address and a logical address.

The second address remapping module 211 may perform one of two processing operations on the logical address. One is to modify the logical address. A manner in which the second address remapping module 211 modifies the logical address is not limited in this embodiment of this application. For example, the second address remapping module 211 may perform inversion on a part of fields in the logical address. For another example, the second address remapping module 211 may perform subtraction on a part of fields in the logical address and a preset value to obtain a difference, and replace the part of fields in the logical address with the difference. The other is to maintain each field in the logical address unchanged. The second address remapping module 211 in the working state may modify the logical address, while the second address remapping module 211 not in the working state maintains each field of the logical address unchanged.

After receiving the logical address sent by the second address remapping module 211, the address translation module 212 may translate the obtained logical address into a corresponding physical address based on the second mapping relationship, and transfer the physical address to the storage chip 220. For a process of parsing the physical address inside the storage chip 220, refer to related descriptions in the embodiment shown in FIG. 1. Details are not described herein again.

FIG. 8 is merely a diagram of a possible structure of the control circuit 210. A division manner of the modules in the control circuit 210 is not limited in this embodiment of this application.

A manner in which the second address remapping module 211 modifies the logical address is similar to the manner in which the first address remapping module 222 modifies the physical address. For details, refer to the foregoing content. Details are not described herein again. A difference lies in that the second address remapping module 211 may use different specific values for fields that are in the logical address and that represent a bank, a row, and a column and perform a different specific operation for each field.

Based on the storage 200 shown in FIG. 8, when the storage 200 enables the address remapping function, not all the second address remapping modules 211 in the control circuit 210 need to be in the working state. That is, when the storage 200 enables the address remapping function, it only needs to be ensured that a part of second address remapping modules 211 in the plurality of second address remapping modules 211 can modify a received logical address. Another second address remapping module 211 does not need to modify the received logical address, and may directly send the logical address to the address decoding circuit 223 after receiving the logical address.

A manner of setting the second address remapping module 211 to be in the working state is similar to the manner of setting the first address remapping module 222 to be in the working state. For details, refer to the foregoing descriptions. Details are not described herein again.

The following describes, with reference to FIG. 9, the data reading/writing method provided in this application. Herein, an example in which the storage 200 provides the enabling option of the address remapping function externally is used for description. When the storage 200 does not provide the enabling option of the address remapping function externally, steps 900 to 901 may be omitted.

Step 900: The processor 100 sends an address remapping instruction to the storage 200. The address remapping instruction is used to instruct to enable the address remapping function, and the address remapping instruction further indicates a second address remapping module 211 that needs to be in the working state.

Step 901: The storage 200 receives the address remapping instruction, and controls, according to the address remapping instruction, the second address remapping module 211 indicated by the address remapping instruction to be in the working state.

Step 902: The processor 100 sends a read/write request to the storage 200. The read/write request carries a logical address.

Step 903: The storage 200 receives the read/write request, and maps, in each storage chip 220 of the storage 200, the logical address to a target position in a bank of the storage chip 220.

In the storage 200, the second address remapping module 211 corresponding to each storage chip 220 obtains the sent logical address. For the second address remapping module 211 in the working state, the second address remapping module 211 modifies a field in the logical address, and sends a modified logical address to the address translation module 212 corresponding to the storage chip 220. The address translation module 212 translates the modified logical address to obtain a physical address, and sends the physical address to the corresponding storage chip 220.

For the second address remapping module 211 not in the working state, the second address remapping module 211 sends the received logical address to the address translation module 212 corresponding to the storage chip 220. The address translation module 212 translates the logical address to obtain a physical address, and sends the physical address to the corresponding storage chip 220.

Step 904: The storage 200 performs data reading/writing at the target position in the bank of each storage chip 220.

When the read/write request is a read request for requesting to read data, the storage 200 reads data from the target position in the bank of each storage chip 220, summarizes data read from the storage chips 220, and feeds back the data to the processor 100.

When the read/write request is a write request for requesting to write data, the storage 200 writes, at the target position in the bank of each storage chip 220, data carried in the write request. Data written at each target position is a part of data carried in the write request, and data written at all the target positions is the data carried in the write request.

It should be noted that in the second implementation, an example in which the second address remapping module 211 directly modifies the logical address is used for description. In a possible implementation, the second address remapping module 211 may not directly modify the logical address, but modify the physical address obtained by translation of the address translation module 212, and then send a modified physical address to the corresponding storage chip 220.

It should be noted that, module division in embodiments of this application is an example, and is merely a logical function division. In an actual implementation, another division manner may be used. Functional modules in embodiments of this application may be integrated into one processing module, or each of the modules may exist alone physically, or two or more modules are integrated into one module. The integrated module may be implemented in a form of hardware, or may be implemented in a form of a software functional module.

The foregoing embodiments may be all or partly implemented by using software, hardware, firmware, or any combination thereof. When software is used for implementation, the foregoing embodiments may be all or partly implemented in a form of a computer program product. The computer program product includes one or more computer instructions. When the computer program instructions are loaded and executed on a computer, the processes or functions according to embodiments of this application are all or partly generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid state drive (solid state drive, SSD).

A person skilled in the art should understand that embodiments of this application may be provided as a method, a system, or a computer program product. Therefore, this application may be implemented in a form of a hardware only embodiment, a software only embodiment, or an embodiment with a combination of software and hardware. In addition, this application may be implemented in a form of a computer program product that is implemented on one or more computer-usable storage media (including but not limited to a magnetic disk storage, a CD-ROM, an optical storage, and the like) including computer-usable program code.

This application is described with reference to flowcharts and/or block diagrams of the method, the device (system), and the computer program product according to this application. It should be understood that each process and/or each block in the flowcharts and/or the block diagrams and a combination of processes and/or blocks in the flowcharts and/or the block diagrams may be implemented by using computer program instructions. These computer program instructions may be provided to a processor of a general-purpose computer, a dedicated computer, an embedded processor, or another programmable data processing device, to produce a machine, so that the instructions executed by the processor of the computer or another programmable data processing device generate an apparatus for implementing functions specified in one or more processes of a flowchart and/or one or more blocks of a block diagram.

These computer program instructions may alternatively be stored in a computer-readable storage that can guide a computer or another programmable data processing device to operate in a particular way, so that the instructions stored in the computer-readable storage produce an article of manufacture including an instruction apparatus, and the instruction apparatus implements the functions specified in the one or more processes of the flowchart and/or the one or more blocks of the block diagram.

These computer program instructions may alternatively be loaded onto a computer or another programmable data processing device, so that a series of operation steps are executed on the computer or another programmable device, to produce computer-implemented processing, and therefore, the instructions executed on the computer or another programmable device provide steps of implementing the functions specified in the one or more processes of the flowchart and/or the one or more blocks of the block diagram.

It is clear that a person skilled in the art can make various modifications and variations to this application without departing from the scope of this application. In this case, if these modifications and variations made to this application fall within the scope of the claims of this application and equivalent technologies thereof, this application is intended to cover these modifications and variations.

**Claims**

1. A data processing system, wherein the system comprises:

   a processor, configured to send a read/write request to a storage, wherein the read/write request carries a logical address of data; and
   the storage, configured to receive the read/write request, map the logical address to target positions in banks of N storage chips in the storage, and perform data reading/writing at the target positions in the banks of the N storage chips, wherein
   the target positions in the banks of the N storage chips are distributed in different areas, and N is a positive integer.

2. The system according to claim 1, wherein before sending the read/write request, the processor is further configured to send an address remapping instruction to the storage, wherein the address remapping instruction is used to enable an address remapping function of the storage.

3. The system according to claim 2, wherein the storage comprises a control circuit and N first address remapping modules, each storage chip corresponds to one first address remapping module, and the control circuit is configured to:

   control, according to the address remapping instruction, M first address remapping modules to be in a working state, wherein M is not greater than N; and
   any first address remapping module in the working state is configured to modify a physical address translated from the logical address, wherein a modified physical address points to a target position in a bank of a storage chip corresponding to the first address remapping module.

4. The system according to claim 3, wherein the first address remapping module in the working state is configured to:
   modify a field that is in the physical address and that points to a row and/or a column in a bank.

5. The system according to any one of claims 2 to 4, wherein the first address remapping module is in a corresponding storage chip; and

the control circuit is further configured to: receive the read/write request, translate the logical address into the physical address, and send the physical address to each storage chip.

6. The system according to claim 3, wherein the first address remapping module not in the working state is configured to: maintain each field in the physical address unchanged, wherein the physical address points to a target position in a bank of a storage chip corresponding to the first address remapping module.

7. The system according to any one of claims 2 to 4, wherein any storage chip is configured to: determine a target position in a bank of the storage chip based on a physical address obtained from a corresponding first address remapping module, and perform data reading/writing at the target position.

8. The system according to claim 2, wherein the control circuit comprises N second address remapping modules, each storage chip corresponds to one second address remapping module, and the control circuit is configured to:

control, according to the address remapping instruction, M first address remapping modules to be in a working state, wherein M is not greater than N; and
any second address remapping module in the working state is configured to modify the logical address, wherein a modified logical address is mapped to a target position in a bank of a storage chip corresponding to the second address remapping module.

9. The system according to claim 8, wherein the second address remapping module in the working state is configured to: modify a field that is in the logical address and that points to a row and/or a column in a bank.

10. The system according to claim 8, wherein the second address remapping module not in the working state is configured to:
maintain each field in the logical address unchanged.

11. The system according to any one of claims 2 and 8 to 10, wherein the control circuit comprises an address translation module; and
the address translation module is configured to: obtain a logical address from the second address remapping module, translate the logical address obtained from the second address remapping module into a physical address, and send the physical address to a storage chip corresponding to the second address remapping module.

12. A storage, wherein the storage comprises a control circuit and N storage chips;

the control circuit is configured to receive a read/write request sent by a processor, wherein the read request is used to request to perform data reading/writing in the storage, and the read/write request carries a logical address of data; and translate the logical address into a physical address, and send the physical address translated from the logical address to the N storage chips, wherein the physical address points to target positions in banks of the N storage chips of the storage, and the target positions in the banks of the N storage chips are distributed in different areas; and
any storage chip is configured to perform data reading/writing at a target position in a bank of the storage chip.

13. The storage according to claim 12, wherein the control circuit is further configured to receive an address remapping instruction sent by the processor, wherein the address remapping instruction is used to enable an address remapping function of the storage.

14. The storage according to claim 13, wherein the storage comprises N first address remapping modules, each storage chip corresponds to one first address remapping module, and the control circuit is configured to:

control, according to the address remapping instruction, M first address remapping modules to be in a working state, wherein M is not greater than N; and
any first address remapping module in the working state is configured to modify the physical address translated from the logical address, wherein a modified physical address points to a target position in a bank of a storage chip corresponding to the first address remapping module.

15. The storage according to claim 13, wherein the first address remapping module in the working state is configured to: modify a field that is in the physical address and that points to a row and/or a column in a bank.

16. The storage according to claim 15, wherein the first address remapping module not in the working state is configured to:

maintain each field in the physical address unchanged, wherein the physical address points to a target position in a bank of a storage chip corresponding to the first address remapping module.

17. The storage according to any one of claims 14 to 16, wherein any storage chip is configured to: determine a target position in a bank of the storage chip based on a physical address obtained from a corresponding first address remapping module, and perform data reading/writing at the target position.

18. The storage according to claim 13, wherein the control circuit comprises N second address remapping modules, each storage chip corresponds to one second address remapping module, and the control circuit is configured to:

control, according to the address remapping instruction, M second address remapping modules to be in a working state, wherein M is not greater than N; and

any second address remapping module in the working state is configured to modify the logical address, wherein a modified logical address is mapped to a target position in a bank of a storage chip corresponding to the second address remapping module.

19. The storage according to claim 18, wherein the second address remapping module in the working state is configured to:

modify a field that is in the logical address and that points to a row and/or a column in a bank.

20. The storage according to claim 18, wherein the second address remapping module not in the working state is configured to:

maintain each field in the logical address unchanged, wherein the logical address is mapped to a target position in a bank of a storage chip corresponding to the second address remapping module.

21. The storage according to any one of claims 13 and 18 to 20, wherein the control circuit comprises an address translation module; and

the address translation module is configured to: translate a logical address obtained from the second address remapping module into a physical address, and send the physical address to a storage chip corresponding to the second address remapping module.

22. A data reading/writing method, wherein the method is applied to a storage, the storage comprises a control circuit and N storage chips, N is a positive integer, and the method comprises:

receiving, by the control circuit, a read/write request sent by a processor, wherein the read request is used to request to perform data reading/writing in the storage, and the read/write request carries a logical address of data; and translating the logical address into a physical address, and sending the physical address translated from the logical address to the N storage chips, wherein the physical address points to target positions in banks of the N storage chips of the storage, and the target positions in the banks of the N storage chips are distributed in different areas; and

performing, by any storage chip, data reading/writing at a target position in a bank of the storage chip.

23. The method according to claim 22, wherein the method further comprises:

receiving, by the control circuit, an address remapping instruction sent by the processor, wherein the address remapping instruction is used to enable an address remapping function of the method.

24. The method according to claim 23, wherein the storage comprises N first address remapping modules, each storage chip corresponds to one first address remapping module, and the method further comprises:

controlling, by the control circuit according to the address remapping instruction, M first address remapping modules to be in a working state, wherein M is not greater than N; and

modifying, by any first address remapping module in the working state, the physical address translated from the logical address, wherein a modified physical address points to a target position in a bank of a storage chip corresponding to the first address remapping module.

25. The method according to claim 24, wherein the modifying, by the first address remapping module in the working state, the physical address translated from the logical address comprises:
modifying, by the first address remapping module in the working state, a field that is in the physical address and that points to a row and/or a column in a bank.

26. The method according to claim 24, wherein the method further comprises:
maintaining, by the first address remapping module not in the working state, each field in the physical address unchanged, wherein the physical address points to a target position in a bank of a storage chip corresponding to the first address remapping module.

27. The method according to any one of claims 24 to 26, wherein the performing, by the any storage chip, data reading/writing at the target position in the bank of the storage chip comprises:
determining, by the any storage chip, the target position in the bank of the storage chip based on a physical address obtained from a corresponding first address remapping module, and performing data reading/writing at the target position.

28. The method according to claim 23, wherein the control circuit comprises N second address remapping modules, each storage chip corresponds to one second address remapping module, and the method further comprises:

controlling, by the control circuit according to the address remapping instruction, M second address remapping modules to be in a working state, wherein M is not greater than N; and
modifying, by any second address remapping module in the working state, the logical address, wherein a modified logical address points to a target position in a bank of a storage chip corresponding to the second address remapping module.

29. The method according to claim 28, wherein the modifying, by the second address remapping module in the working state, the logical address comprises:
modifying, by the second address remapping module in the working state, a part of fields that are in the logical address and that point to a row and/or a column in a bank.

30. The method according to claim 28, wherein the method further comprises:
maintaining, by the second address remapping module not in the working state, each field in the logical address unchanged, wherein the logical address points to a target position in a bank of a storage chip corresponding to the second address remapping module.

31. The method according to any one of claims 23 and 28 to 30, wherein the control circuit comprises an address translation module, and the translating, by the control circuit, the logical address into the physical address, and sending the physical address translated from the logical address to the N storage chips of the storage comprises:
translating, by the address translation module, a logical address obtained from the second address remapping module into a physical address, and sending the physical address to a storage chip corresponding to the second address remapping module.

32. A computing device, wherein the computing device comprises the storage according to any one of claims 12 to 21.

FIG. 1

FIG. 2

FIG. 3

FIG. 4

FIG. 5A

FIG. 5B

Bank

| Address register 221 | Physical address → | First address remapping module 222 | Modified physical address → | Address decoding circuit 223 |

AREA3

AREA2

AREA1

Modify a field that is in the physical address and that represents a row

FIG. 5C

Bank

| Address register 221 | Physical address → | First address remapping module 222 | Modified physical address → | Address decoding circuit 223 |

AREA3

AREA2

AREA1

Modify fields that are in the physical address and that represent a row and a column

FIG. 5D

Bank

FIG. 6A

FIG. 6B

700: Address remapping instruction

701: Control, according to the address remapping instruction, a first address remapping module to be in a working state

702: Read/Write request (with a logical address)

703: Map the logical address to target positions in banks of storage chips (modify a physical address)

704: Perform data reading/writing at the target positions in the banks of the storage chips

FIG. 7

Storage 200

Control circuit 210

| Second address remapping module 211 | Address translation module 212 | Storage chip 220 |

| Second address remapping module 211 | Address translation module 212 | Storage chip 220 |

Processor 100

...                                                                    ...

| Second address remapping module 211 | Address translation module 212 | Storage chip 220 |

FIG. 8

Processor 100                                          Storage 200

900: Address remapping instruction

901: Control, according to the address remapping instruction, a second address remapping module to be in a working state

902: Read/Write request

903: Map the logical address to target positions in banks of storage chips (modify the logical address)

904: Perform data reading/writing at the target positions in the banks of the storage chips

FIG. 9

## INTERNATIONAL SEARCH REPORT

International application No.

**PCT/CN2024/099055**

### A. CLASSIFICATION OF SUBJECT MATTER

G06F 12/06(2006.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 存储器, 地址, 重映射, 重定位, bank, 行, 列, 逻辑地址, 物理地址, memory, address, remap, modify, relocate, line, column, logical address, physical address

### C. DOCUMENTS CONSIDERED TO BE RELEVANT

| Category* | Citation of document, with indication, where appropriate, of the relevant passages | Relevant to claim No. |
|---|---|---|
| X | US 2016276002 A1 (VIXS SYSTEMS INC.) 22 September 2016 (2016-09-22) description, paragraphs [0014]-[0026] | 1-3, 5-7, 12-14, 17, 22-24, 26-27, 32 |
| A | CN 110970077 A (WESTERN DIGITAL TECHNOLOGIES, INC.) 07 April 2020 (2020-04-07) entire document | 1-32 |
| A | CN 111352855 A (SK HYNIX INC.) 30 June 2020 (2020-06-30) entire document | 1-32 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 August 2024** | **29 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| US | 2016276002 | A1 | 22 September 2016 | US | 10019358 | B2 | 10 July 2018 |
| CN | 110970077 | A | 07 April 2020 | US | 2020105354 | A1 | 02 April 2020 |
| | | | | US | 10811112 | B2 | 20 October 2020 |
| CN | 111352855 | A | 30 June 2020 | KR | 20200077276 | A | 30 June 2020 |
| | | | | US | 2020201774 | A1 | 25 June 2020 |
| | | | | US | 11119934 | B2 | 14 September 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310794233

- CN 202311199956